# FASCICULE DE BREVET EUROPEEN

(11) **EP 0 982 960 B1**
(45) Date de publication et mention de la délivrance du brevet: **12.07.2006**
(21) Numéro de dépôt: 99460053.4
(22) Date de dépôt: 25.08.1999
(51) Int. Cl.: H04Q 7/34

(54) **Procédé de test d'un réseau de radiocommunication, dispositif et station de base correspondants**
Funkkommunikationsnetz Testverfahren und entsprechende Vorrichtung und Basisstation
Radiocommunication network test procedure and corresponding device and base station

(30) Priorité: 26.08.1998 FR 9810846
(43) Date de publication de la demande: 01.03.2000
(73) Titulaire: Société Française du Radiotéléphone-SFR, 75008 Paris (FR)
(72) Inventeur: Remy, Jean-Gabriel, 94170 Le Perreux (FR)
(74) Mandataire: Vidon, Patrice

(56) Documents cités:
- EP-A- 0 647 978

## Description

Le domaine de l'invention est celui des systèmes de radiocommunication avec des mobiles.

L'invention s'applique notamment, mais non exclusivement, dans des systèmes de radiocommunication de type UMTS (pour "Universal Mobile Telecommunication System - 2 GHz" en anglais) ou GSM 900 (pour "Global System for Mobile- 900 MHz" en anglais ou "Groupe spécial Systèmes Mobiles publics de radiocommunication fonctionnant dans la bande des 900 MHz"), DCS 1800 (pour "Digital Cellular System - 1800 MHz" en anglais) ou PCS 1900 (pour "Personal Communication System - 1900 MHz" en anglais).

Plus précisément, la présente invention concerne un procédé de test d'un réseau de radiocommunication consistant à détecter et élucider les interférences entre au moins deux émetteurs, à savoir d'une part une station mobile, émettant des signaux utiles en direction d'une station de base, et d'autre part au moins un brouilleur, émettant des signaux de brouillage également dans la direction de la station de base.

On rappelle que, d'une façon générale, un système de radiocommunication comprend une pluralité de stations de base, chacune assurant la couverture radio d'une cellule géographique distincte.

Dans la suite de la présente description, par le terme "brouilleur" (vis-à-vis d'une station mobile donnée), on entend tout type de dispositif émettant, en direction d'une station de base avec laquelle communique la station mobile donnée, des signaux présentant au moins certaines caractéristiques identiques ou similaires à celles des signaux issus de la station mobile donnée.

Selon les systèmes, la station mobile est parfois appelée terminal de radiocommunication, radiotéléphone mobile, téléphone portable ou encore terminal mobile de radiocommunication. Par souci de simplification, on emploie uniquement, dans la suite de ce document de brevet, l'expression "station mobile".

On rappelle qu'une station mobile est un équipement physique utilisé par un usager d'un réseau du système de radiocommunication pour accéder, via une station de base, aux services de télécommunication offerts.

On rappelle également qu'une station de base couvre une zone géographique donnée (ou cellule) dans laquelle peuvent se déplacer une pluralité de stations mobiles avec lesquels la station de base peut échanger des signaux. De façon classique, une station de base comprend au moins une antenne destinée à recevoir et/ou émettre des signaux depuis et/ou vers une pluralité de stations mobiles.

Les signaux échangés entre une station mobile et la station de base peuvent subir des interférences pouvant générer une perte partielle, voire totale, des informations véhiculées. On rappelle que les phénomènes d'interférences sont provoqués notamment lorsque des signaux de caractéristiques identiques ou similaires sont mis en jeu dans un même milieu de propagation. Par caractéristiques identiques ou similaires, on entend par exemple une même fréquence, un même code ou un même intervalle de temps, selon que le système met en oeuvre respectivement un multiplexage fréquentiel (ou FDMA, pour "Frequency Division Multiple Access" en anglais ou "Accès Multiple par Répartition en Fréquence" en français), par code (ou CDMA, pour "Coded Division Multiple Access" en anglais ou "Accès Multiple par Répartition en Code" en français) ou temporel (ou TDMA, pour "Time Division Multiple Access" en anglais ou "Accès Multiple par Répartition en Temps" en français). En d'autres termes, les interférences sont dues à la présence d'au moins un brouilleur émettant des signaux (dits "de brouillage") qui perturbent les signaux (dits "utiles") émis par une station mobile. On comprendra donc que de telles perturbations peuvent engendrer des problèmes cruciaux quant à la qualité de réception et d'exploitation des signaux émis par une station mobile et destinés à une station de base.

Or, l'état actuel de la technique ne permet pas de déceler la présence de brouilleur(s). On comprendra cependant qu'il est nécessaire, pour diminuer voire supprimer les interférences dues à un ou plusieurs brouilleur(s), de connaître leur existence et éventuellement leur nature, afin de prendre des mesures appropriées pour tenter de les supprimer.

On connaît également le document 1 (EP 647 978) qui décrit une antenne d'une station de base d'un système de radiocommunication comprenant une pluralité de réseaux d'éléments d'antenne rayonnants, chacun capable de former une multiplicité de faisceaux étroits, séparés et se chevauchant en azimut, les réseaux étant arrangés de telle manière que les divers faisceaux formés par les divers réseaux présentent une couverture en azimut plus large que chacun des réseaux. Des moyens sont proposés pour diviser la sortie d'émission d'un émetteur / récepteur donné en deux signaux avant amplification de la puissance d'émission, lesdits signaux étant ensuite émis suivant deux faisceaux adjacents, étroits et se chevauchant. Il est prévu une unique chaîne de réception, comprenant elle-même, de façon totalement classique, un processeur de commande et un discriminateur d'interférences. Cette chaîne de réception est affectée à la réception de signaux selon une unique direction d'arrivée, déterminée par le processeur de commande qui choisit le « meilleur » faisceau (normalement celui pointant en direction du mobile). Le rôle du discriminateur d'interférences est en fait de simplement vérifier que les signaux reçus par ce « meilleur » faisceau proviennent bien d'un mobile situé dans la cellule, ou au contraire de détecter que ces signaux reçus proviennent d'un mobile situé dans une cellule adjacente ou encore d'une autre source et donc d'un brouilleur quelconque.

La présente invention a notamment pour objectif de pallier cet inconvénient de l'état de la technique.

Plus précisément, l'un des objectifs de la présente invention est de fournir un procédé de test d'un réseau de radiocommunication permettant de détecter la présence d'au moins un brouilleur.

Un objectif supplémentaire de l'invention est de fournir un tel procédé permettant de déterminer la nature éventuelle du ou des brouilleur(s).

Un autre objectif de l'invention est de fournir un tel procédé pouvant être mis en oeuvre sans aucune modification des signaux échangés entre une station mobile et une station de base.

Un autre objectif de l'invention est de fournir un tel procédé pouvant être mis en oeuvre, sans aucune modification matérielle des stations mobiles existantes, ni, éventuellement, des stations de base.

Un autre objectif de l'invention est de fournir un dispositif permettant la mise en oeuvre d'un tel procédé de test d'un réseau de radiocommunication.

Un autre objectif de l'invention est de fournir une station de base permettant la mise en oeuvre d'un tel procédé de test d'un réseau de radiocommunication.

Ces différents objectifs, ainsi que d'autres qui apparaîtront par la suite, sont atteints selon l'invention à l'aide d'un procédé de test d'un réseau de radiocommunication consistant à détecter et élucider les interférences entre au moins deux émetteurs, à savoir d'une part une station mobile émettant des signaux utiles en direction d'une station de base, et d'autre part au moins un brouilleur émettant des signaux de brouillage également en direction de ladite station de base comprenant les étapes suivantes :
- on met en oeuvre, en aval d'une première antenne, une première chaîne de réception, et en aval d'au moins une seconde antenne, au moins une seconde chaîne de réception distincte de ladite première chaîne de réception, chaque antenne comprenant un réseau d'éléments rayonnants répartis matriciellement sur un support;
- on affecte ladite première chaîne de réception à la réception de premiers signaux, selon une première direction d'arrivée ;
- on affecte ladite au moins une seconde chaîne de réception à la réception de seconds signaux, selon au moins une seconde direction d'arrivée ;
- chaque chaîne de réception tente de décoder les signaux qu'elle reçoit, et si le décodage peut être effectué, lit un identifiant véhiculé par les signaux et propre à l'émetteur qui les a émis, de façon à déterminer d'une part lesquels desdits premiers et seconds signaux sont lesdits signaux de brouillage, et d'autre part au moins une des informations appartenant au groupe comprenant :
   * la direction d'arrivée desdits signaux de brouillage ;
   * l'identifiant éventuel dudit au moins un brouilleur émettant lesdits signaux de brouillage.

Le principe général de l'invention repose donc sur la focalisation simultanée de plusieurs faisceaux rayonnants radioélectriques de réception (un par antenne) respectivement sur différentes sources de signaux (à savoir une source de signaux utiles et une ou plusieurs éventuelle(s) source(s) de signaux de brouillage). Ainsi, au moins une chaîne de réception se trouve affectée au traitement des éventuels signaux de brouillage.

De cette manière, il est possible non seulement de savoir si un ou des brouilleur(s) est (sont) présent(s), mais également, de repérer leur position angulaire et de connaître éventuellement leur nature.

Il convient de noter que l'on utilise la terminologie "première" antenne et "deuxième" antenne (dite antenne "intelligente"). pour simplifier la compréhension de l'invention. Il est clair cependant qu'il n'est pas obligatoire qu'il y ait autant d'antennes qu'il y a de chaînes de réception. Une même antenne peut alimenter plusieurs (voire toutes les) chaînes de réception. En d'autres termes, la première et la seconde antennes peuvent former une unique antenne.

On peut également prévoir qu'au moins certains éléments rayonnants d'un même support sont partagés par plusieurs antennes.

De façon avantageuse, ladite direction d'arrivée s'exprime en fonction d'au moins un des angles appartenant au groupe comprenant :
- l'azimut ;
- le site.

On rappelle qu'une antenne associée à une chaîne de réception forme un faisceau rayonnant radioélectrique de réception, qui peut être orienté en site (c'est-à-dire l'angle formé par la ligne reliant la station mobile à l'antenne avec le plan horizontal contenant le support de l'antenne) et/ou en azimut (c'est-à-dire l'angle formé entre une ligne référence dans le plan horizontal contenant le support de l'antenne et la projection, de direction perpendiculaire à ce plan horizontal, de la ligne reliant l'antenne à la station mobile).

Préférentiellement, ledit au moins un brouilleur appartient au groupe comprenant :
- les stations mobiles dudit réseau de radiocommunication ;
- les stations de base dudit réseau de radiocommunication ;
- les émetteurs n'appartenant pas audit réseau de radiocommunication.

On notera que la nature du ou des brouilleur(s) peut être quelconque, et peut notamment correspondre à celle d'un ou d'émetteur(s) étranger(s) à tout réseau de radiocommunication.

Dans un mode de réalisation particulier de l'invention, ledit procédé comprend, en outre, une étape d'affichage d'au moins une des informations appartenant au groupe comprenant :
- l'identifiant ou l'absence d'identifiant, dudit au moins un brouilleur ;
- la direction d'arrivée des signaux de brouillage.

On notera que lorsqu'un brouilleur s'avère être une station mobile ou une station de base du réseau de radiocommunication, le procédé de l'invention constitue une technique de détection des imperfections du réseau de radiocommunication concerné. En effet, cela traduit une mauvaise gestion de la répartition des ressources telle qu'une double affectation d'une même ressource. C'est par exemple le cas de deux stations de base voisines (ou relativement proches) qui utilisent toutes les deux au moins un même paramètre de communication, tel qu'une fréquence, un code, un intervalle de temps,..., pour communiquer chacune avec une station mobile distincte.

De façon préférentielle, ladite station de base et ladite station mobile sont comprises dans un système de radiocommunication cellulaire appartenant au groupe comprenant :
- les systèmes du type UMTS ;
- les systèmes du type GSM 900 ;
- les systèmes du type DCS 1800 ;
- les systèmes du type PCS 1900.

Il est clair cependant que cette liste n'est pas limitative.

L'invention concerne également un dispositif de test d'un réseau de radiocommunication destiné à mettre en oeuvre le procédé décrit précédemment. Selon l'invention, ledit dispositif comprend :
- une première et une seconde antennes comprenant chacune un réseau d'éléments rayonnants répartis matriciellement sur un support ;
- en aval de ladite première antenne, une première chaîne de réception comprenant des premiers moyens de réception, et en aval de ladite au moins une seconde antenne, au moins une seconde chaîne de réception distincte de ladite première chaîne de réception et comprenant des seconds moyens de réception ;
- des moyens d'affectation de ladite première chaîne de réception à la réception de premiers signaux, selon une première direction d'arrivée ;
- des moyens d'affectation de ladite au moins une seconde chaîne de réception à la réception de seconds signaux, selon au moins une seconde direction d'arrivée ;
- des moyens de décodage des signaux reçus par chacune desdites chaînes de réception ;
- des moyens de lecture, placés en aval desdits moyens de décodage, de façon à lire un identifiant véhiculé par les signaux et propre à l'émetteur qui les a émis ;
- des moyens de prise de décision, permettant, en fonction de signaux de sortie desdits moyens de décodage et de lecture, de déterminer d'une part lesquels desdits premiers et seconds signaux sont lesdits signaux de brouillage, et d'autre part au moins une des informations appartenant au groupe comprenant :
   * la direction d'arrivée desdits signaux de brouillage ;
   * l'identifiant éventuel dudit au moins un brouilleur émettant lesdits signaux de brouillage.

On rappelle cependant que, selon une variante de réalisation de l'invention, on peut prévoir une unique antenne alimentant les différentes chaînes de réception des signaux (signaux utiles et une ou plusieurs source(s) de signaux de brouillage). Dans ce cas, on comprendra que la première et seconde antennes ne constituent qu'une seule et même antenne.

L'invention concerne aussi une station de base permettant de détecter et d'élucider les interférences entre au moins deux émetteurs, à savoir d'une part une station mobile émettant des signaux utiles en direction de ladite station de base, et d'autre part au moins un brouilleur émettant des signaux de brouillage également en direction de ladite station de base. Selon l'invention, ladite station de base comprend le dispositif de test d'un réseau de radiocommunication décrit ci-dessus.

On notera que certains éléments (tels que la première antenne et la première chaîne de réception) du dispositif de test sont des éléments déjà compris dans la station de base pour permettre à cette dernière de communiquer avec les stations mobiles. Dans ce cas, il existe une forte synergie et le coût du dispositif de test est donc réduit aux seuls éléments non déjà compris dans la station de base.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un organigramme simplifié d'un mode de réalisation particulier d'un procédé selon l'invention de test d'un réseau de radiocommunication ;
- la figure 2 présente une vue en trois dimensions des différents éléments intervenant dans la mise en oeuvre du procédé de la figure 1 ; et
- la figure 3 présente en détail un schéma simplifié d'un mode de réalisation particulier du dispositif de test selon l'invention apparaissant sur la figure 2.

L'invention concerne donc un procédé et un dispositif de test d'un réseau de radiocommunication consistant à détecter et élucider les interférences entre au moins deux émetteurs, à savoir une station mobile émettant des signaux utiles en direction d'une station de base et au moins un brouilleur émettant des signaux de brouillage également en direction de la station de base.

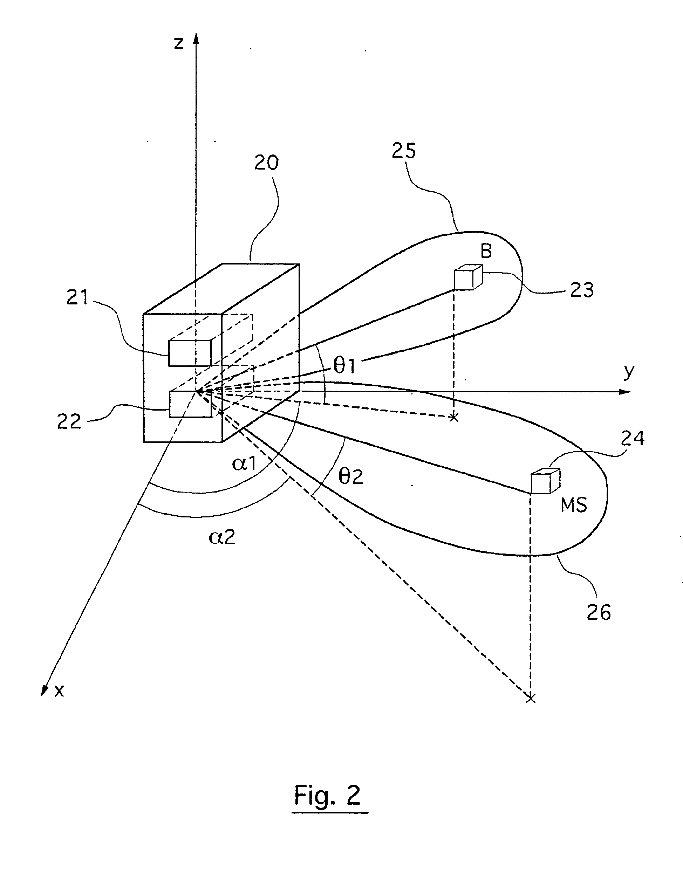

Par souci de simplification, et comme présenté sur la figure 2, on suppose dans la suite de la description qu'un unique brouilleur B émet des signaux de brouillage qui interfèrent avec des signaux utiles émis par une station mobile MS en cours de communication avec une station de base BTS. Il est clair cependant que le procédé de l'invention peut permettre simultanément la détection d'une pluralité de brouilleurs, en mettant par exemple en oeuvre une pluralité de chaînes de réception (chacune permettant de détecter un brouilleur). Ces différents signaux (utiles et de brouillage) sont reçus via des faisceaux rayonnants radioélectriques de réception distincts.

Dans la suite de la description et toujours par souci de simplification, on considère deux antennes comprenant chacune un réseau d'éléments rayonnants répartis matriciellement sur un support, chacune des deux antennes étant reliée à une chaîne de réception de signaux (utiles ou de brouillage).

Il convient cependant de rappeler que, selon une variante de réalisation de l'invention, une unique antenne peut être reliée aux deux chaînes de réception des signaux (utiles et de brouillage). Selon cette variante de réalisation, en pratique, l'unique antenne constitue la partie matérielle et les deux chaînes de réception sont gérées par des moyens logiciels.

Par ailleurs, on considère également que le système de radiocommunication cellulaire auquel appartiennent la station de base et la station mobile est du type UMTS et mettant en oeuvre un multiplexage FDD-WCDMA à la fréquence de 2 GHz. Le mode W-CDMA (pour "Wide band Code Division Multiple Access" en anglais) de l'UMTS est défini dans la décision de l'ETSI de janvier 1998 concernant l'UMTS ("Universal Mobile Telecommunication System"), cette décision étant insérée ici par référence. On rappelle en effet que l'interface radio de l'UMTS a été arrêtée dans ses grandes lignes en janvier 1998. Le mode W-CDMA utilise un accès CDMA sur une canalisation à 5 MHz. Il est basé sur un multiplexage en codes des communications avec les stations mobiles (Accès Multiple à Répartition en codes), combiné à un duplexage en fréquences de l'émission et de la réception (ou FDD, pour "Frequency Division Duplex", tel que deux bandes de fréquence distinctes sont utilisées simultanément, l'une en émission et l'autre en réception).

Cependant, la station de base et la station mobile peuvent également être compris dans des systèmes par exemple du type GSM 900 ou du type DCS 1800 ou encore du type PCS 1900...

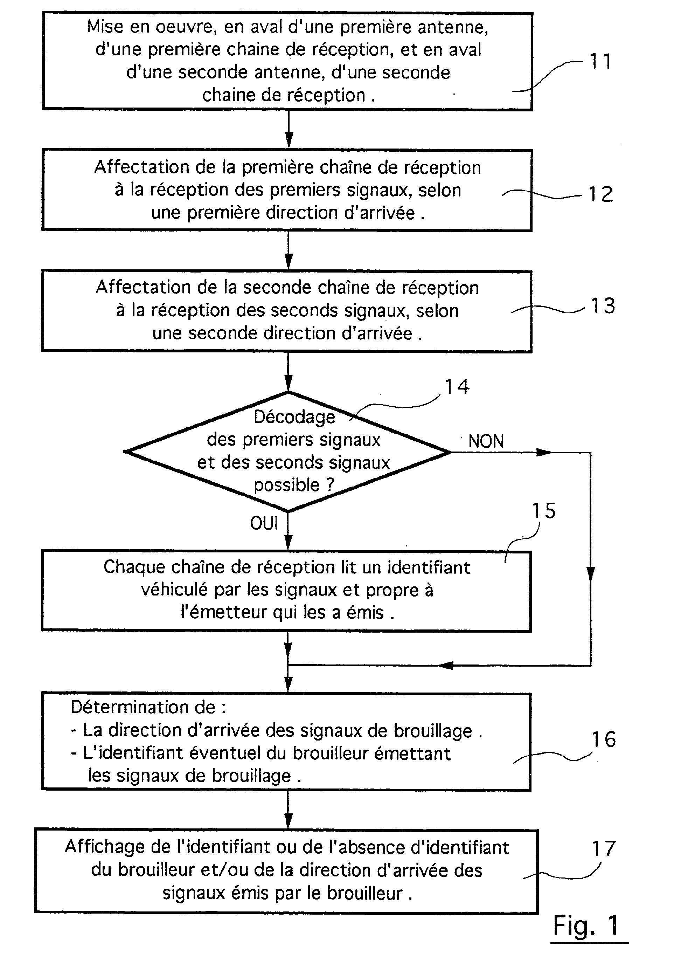

On présente maintenant, en relation avec l'organigramme simplifié de la figure 1, un mode de réalisation particulier du procédé selon l'invention de test d'un réseau de radiocommunication.

Selon l'invention, le procédé comprend les étapes suivantes :
- on met (11) en oeuvre, en aval d'une première antenne, une première chaîne de réception, et en aval d'une seconde antenne, une seconde chaîne de réception distincte de la première chaîne de réception, chaque antenne comprenant un réseau d'éléments rayonnants répartis matriciellement sur un support. A chaque chaîne de réception est associée un faisceau rayonnant radioélectrique de réception propre ;
- on affecte (12) la première chaîne de réception à la réception de premiers signaux, selon une première direction d'arrivée. Ces premiers signaux sont issus d'un premier émetteur situé soit dans la zone géographique couverte par la station de base soit dans un environnement proche, tel que dans une cellule voisine ou à proximité de la station de base concernée ;
- on affecte (13) la seconde chaîne de réception à la réception de seconds signaux, selon une seconde direction d'arrivée. Ces seconds signaux présentent au moins certaines caractéristiques identiques ou similaires à celles utilisées par le premier émetteur. Les seconds signaux sont issus d'un second émetteur situé également soit dans la zone géographique couverte par la station de base soit dans un environnement proche, tel que dans une cellule voisine ou à proximité de la station de base concernée ;
- chaque chaîne de réception tente (14) de décoder les signaux qu'elle reçoit,
- si le décodage de chaque chaîne de réception peut être effectué, de façon complète, chaque chaîne de réception lit (15) un identifiant véhiculé par les signaux et propre à l'émetteur qui les a émis, de façon à déterminer (16) d'une part lesquels des premiers et seconds signaux sont les signaux de brouillage, et d'autre part la direction d'arrivée des signaux de brouillage ainsi que l'identifiant du brouilleur émettant les signaux de brouillage. Cet identifiant est par exemple celui du brouilleur au sein de la cellule dans laquelle l'élément brouilleur se trouve. Cet identifiant est véhiculé par tous les messages transmis par exemple sur les canaux BCCH (pour "Broadcast Control CHannel" en anglais) et BSIC (pour "Base Station Identity Code" en anglais ou "Code d'Identité de la station de base" en français) selon la norme GSM. Dans ce premier cas, le brouilleur appartient au réseau de radiocommunication ;
- si le décodage d'une chaîne de réception n'est pas possible alors on en déduit directement lesquels desdits premiers et seconds signaux sont les signaux utiles (ce sont les signaux ayant pu être décodés) et les signaux de brouillage (ce sont ceux n'ayant pu être décodés). Dans ce second cas, le brouilleur est donc étranger au réseau de radiocommunication, on détermine (16) seulement la direction d'arrivée des signaux de brouillage.

Dans un mode de réalisation particulier, le procédé comprend, en outre, une étape (17) d'affichage de l'identifiant ou de l'absence d'identifiant du brouilleur et/ou de la direction d'arrivée des signaux de brouillage. Un opérateur qui utilise le procédé de l'invention visualise ainsi la nature du brouilleur et/ou l'origine précise des signaux de brouillage.

Un tel procédé permet, pour une communication donnée, non seulement de détecter la présence d'un brouilleur dans la cellule associée à la station de base concernée (ou dans un environnement proche de cette cellule), mais également de renseigner l'opérateur sur la zone dans laquelle se trouve le brouilleur. Cette zone englobe notamment la zone couverte par le faisceau rayonnant radioélectrique de réception associé à la chaîne de réception correspondante (c'est-à-dire soit la première soit la seconde chaîne de réception).

En fonction de la nature du ou des brouilleur(s) et/ou de la position angulaire du faisceau rayonnant radioélectrique de réception des signaux de brouillage, l'opérateur peut prendre toute(s) mesure(s) appropriée(s) permettant de supprimer l'émission de tels signaux de brouillage. La ou les mesure(s) peu(ven)t consister notamment :
- soit à affecter un ou des nouveau(x) paramètre(s) distinct(s) de ceux utilisés par les communications en cours, dans la station de base concernée ou éventuellement dans une ou des stations de base voisine(s). On notera qu'un tel procédé permet notamment de s'apercevoir, avec précision, des oublis et/ou erreurs commises dans le voisinage de la station de base concernée en WCDMA, qui génèrent par exemple des codes non orthogonaux (et donc des interférences) ;
- soit à prévenir une autorité compétente pour lui signaler un intrus, selon une direction d'arrivée déterminée. L'intrus est, en effet, selon toutes vraisemblances, non autorisé à émettre avec au moins certaine(s) des caractéristiques qu'il utilise, dans la zone dans laquelle il se trouve.

Suite au(x) mesure(s) prise(s) en fonction notamment de la nature du brouilleur, la qualité de réception par la station de base des signaux utiles émis par la station mobile peut alors être améliorée.

On présente maintenant, en relation avec la vue partiellement en trois dimensions d'un schéma simplifié de la figure 2, une station de base d'un réseau de radiocommunication.

Une station de base 21 est située en un site 20 définissant le centre d'une cellule donnée qui lui est affectée, dans laquelle elle peut recevoir et émettre des signaux. Un dispositif 22 de test d'un réseau de radiocommunication est placée sur le même site 20 que celui de la station de base 21, par exemple en l'origine O du repère à trois dimensions (Ox, Oy, Oz). Un tel dispositif 22 est destiné à mettre en oeuvre le procédé décrit précédemment, afin de détecter et d'élucider les interférences entre deux émetteurs, à savoir d'une part une station mobile (MS) 24 émettant des signaux utiles en direction de la station de base 21 et d'autre part un brouilleur (B) 23 émettant des signaux de brouillage également en direction de la station de base 21.

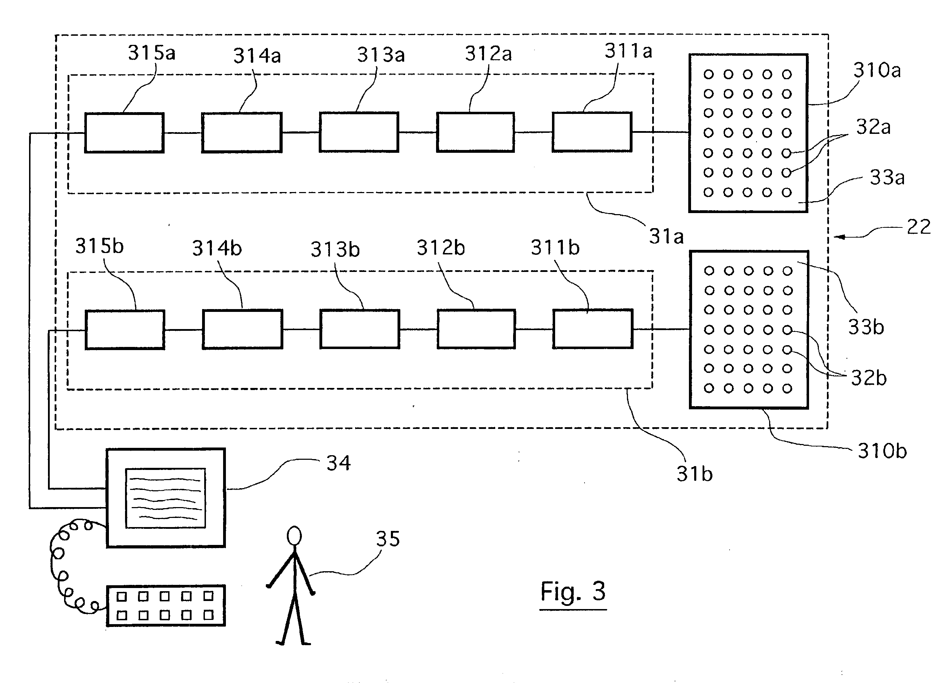

Pour ce faire, le dispositif 22 comprend deux antennes intelligentes directives 310a, 310b tel qu'il est expliqué, en détail, plus loin (cf figure 3).

On rappelle qu'une antenne intelligente directive, ou antenne intelligente à adaptation de faisceaux ("Adaptative Smart Antennas"), comprend un réseau d'éléments rayonnants répartis matriciellement sur un support (ou panneau). Le réseau d'éléments rayonnants est composé d'une pluralité de colonnes d'éléments rayonnants, pilotée généralement chacune indépendamment des autres, de façon à former un faisceau selon un azimut donné.

En jouant, colonne par colonne, sur la phase et la puissance de chacun des éléments rayonnants, le dispositif 22 de test d'un réseau de radiocommunication pilote les antennes 310a, 310b, de façon que celles-ci génèrent deux faisceaux 25, 26 rayonnants radioélectriques directifs, et orientés en azimut, vers la station mobile 24 et l'éventuel brouilleur 23. En d'autres termes, un premier diagramme 26 de rayonnement de l'antenne 310b est pointé (ou encore focalisé) sur la station mobile 24 en communication et un second diagramme 25 de rayonnement de l'antenne 310a est pointé sur l'éventuel brouilleur 23.

Il est à noter que, de façon à encore améliorer la directivité et le gain des antennes 310a, 310b intelligentes comprises dans le dispositif 22 de test d'un réseau de radiocommunication, on peut prévoir d'orienter les faisceaux 25, 26 rayonnants radioélectriques, non seulement en azimut, mais aussi en site. Une telle technique est décrite dans la demande de brevet française n° 98 08782 (non publiée), au nom du même déposant. Selon cette technique, l'orientation du faisceau de réception est réalisée à la fois en site et en azimut, au moyen d'une action sur les paramètres de réception de chacun des éléments rayonnants, différemment l'un par rapport à l'autre.

Les faisceaux radioélectriques de réception 25, 26 peuvent donc être orientés en azimut et en site, selon deux couples d'angles (α₁ ; θ₁) et (α₁ ; θ₂) respectivement, avec α₁ et α₂ les angles d'azimut, et θ₁ et θ₂ les angles de site. Les couples d'angles (α₁ ; θ₁) et (α₂ ; θ₂) représentent deux directions distinctes d'arrivée des signaux utiles et des signaux de brouillage.

Le brouilleur 23 peut être un élément appartenant au réseau de radiocommunication qui comprend la station mobile 24 et la station de base 21. Il peut donc s'agir d'une station mobile ou d'une station de base voisine. Le brouilleur 23 peut également être un élément étranger au réseau de radiocommunication.

On cite maintenant, à titre d'exemple, des situations de brouillage classiques selon le type de multiplexage mis en oeuvre par le système de radiocommunication :
- multiplexage fréquentiel (FDMA) : un brouilleur émet sur la fréquence allouée à la station mobile en cours de communication :
   * soit le brouilleur est de nature connue (c'est une station mobile ou une station de base du réseau de radiocommunication) : il émet alors, sur sa fréquence, un identifiant au sein du réseau de radiocommunication ;
   * soit le brouilleur ne fait pas partie du réseau de radiocommunication : il n'émet alors pas d'identifiant du réseau de radiocommunication ;
- multiplexage temporel (TDMA) : le brouilleur émet sur l'intervalle de temps alloué à la station mobile en cours de communication :
   * soit le brouilleur appartient au réseau de radiocommunication : il émet alors, pendant son intervalle de temps, un identifiant au sein du réseau de radiocommunication ;
   * soit le brouilleur est étranger au réseau de radiocommunication : il n'émet pas d'identifiant ;
- multiplexage par code (CDMA ou WCDMA) : le brouilleur émet dans une bande de fréquence allouée à la station mobile en cours de communication ou à une fréquence parasite (c'est-à-dire une fréquence multiple de celle allouée à la station mobile) :
   * soit le brouilleur appartient au réseau de radiocommunication : il émet alors, sur un code non orthogonal au code utilisé par la station mobile, un identifiant au sein du réseau de radiocommunication ;
   * soit le brouilleur est étranger au réseau de radiocommunication : il n'émet pas avec un code et donc sans identifiant au sein du réseau de radiocommunication.
      Comme présenté sur le schéma simplifié de la figure 3, dans un mode de réalisation particulier, le dispositif 22 selon l'invention de test d'un réseau de radiocommunication comprend :
      - une première et une seconde antennes 310a, 310b comprenant chacune un réseau d'éléments rayonnants 32a, 32b répartis matriciellement sur un support 33a, 33b. Les antennes 310a, 310b permettent de suivre en temps réel la station mobile 24 et un éventuel brouilleur 23, lorsque ceux-ci se déplacent au sein de la zone géographique couverte par les deux antennes 310a et 310b ;
- en aval de la première antenne 310a, une première chaîne de réception 31a comprenant des premiers moyens 312a de réception, et en aval de la seconde antenne 310b, une seconde chaîne de réception 31b distincte de la première chaîne de réception 31a et comprenant des seconds moyens 312b de réception. Ces premiers et seconds moyens 312a et 312b de réception sont connus en soi et assurent le traitement radio des signaux reçus par leur antenne respective (classiquement sommation des différentes contributions, amplification, filtrage, transfert en bande de base, conversion analogique/numérique, maximisation de la réception du signal par l'obtention d'un niveau de puissance de réception maximum et/ou d'un taux d'erreur binaire minimum (ou "Binary Error Rate"en anglais)...) ;
- des moyens 311a d'affectation de la première chaîne de réception 31a à la réception de premiers signaux, selon une première direction d'arrivée (α₁ ; θ₁) avec α₁ l'angle d'azimut et θ₁ l'angle de site. La détermination de la première direction d'arrivée peut s'effectuer à partir des déphasages relatifs observés entre les différents éléments rayonnants ;
- des moyens 311b d'affectation de la seconde chaîne de réception 31b à la réception de seconds signaux, selon une seconde direction d'arrivée (α₂ ; θ₂) avec α₂ l'angle d'azimut et θ₂ l'angle de site. La détermination de la seconde direction d'arrivée peut également s'effectuer à partir des déphasages relatifs observés entre les différents éléments rayonnants ;
- des moyens 313a, 313b de décodage des signaux reçus par chacune des chaînes de réception 31a, 31b. Ces moyens 313a, 313b permettent de décoder les premiers et seconds signaux, de façon à retrouver les messages transmis par ces derniers ;
- des moyens 314a, 314b de lecture, placés en aval des moyens 313a, 313b de décodage, de façon à lire un identifiant véhiculé par les signaux et propre à l'émetteur qui les a émis. C'est cet identifiant qui renseigne sur la nature des émetteurs (la station mobile 24 en cours de communication et le brouilleur 23) ;
- des moyens 315a, 315b de prise de décision, permettant, en fonction de signaux de sortie des moyens 313a, 313b de décodage et 314a, 314b de lecture, de déterminer d'une part lesquels des premiers et seconds signaux sont les signaux de brouillage, et d'autre part la direction d'arrivée des signaux de brouillage et/ou l'identifiant éventuel du brouilleur 23 émettant les signaux de brouillage.

Le dispositif 22 comprend en outre des moyens 34 d'affichage de l'identifiant ou de l'absence d'identifiant du brouilleur 23 et/ou de la direction d'arrivée des signaux de brouillage. Un opérateur 35 peut consulter les résultats de la recherche de brouilleur(s) pour une communication donnée entre la station mobile 24 et la station de base 21 qui utilise le dispositif 21 décrit ci-dessus.

Dans le cas où le brouilleur appartient au réseau de radiocommunication, l'opérateur 35 peut, dès qu'il en est informé (par exemple par affichage), modifier le ou les paramètre(s) de communication correspondant(s) pour supprimer les interférences. Il peut notamment s'agir d'une intervention au niveau d'une station de base voisine présentant une anomalie ou d'une station mobile défectueuse dont certaines caractéristiques (et notamment celles influant sur les signaux échangés) sont à modifier.

Dans le cas où le brouilleur n'appartient pas au réseau de radiocommunication, l'information dont on dispose concernant le brouilleur (à savoir sa position angulaire par rapport à la station de base) peut être communiquée aux autorités compétentes (comités d'attribution des ressources, police, etc...), afin que ces dernières retrouvent le propriétaire du brouilleur et fassent cesser le trouble qu'il occasionne.

Selon une variante de réalisation, le dispositif 22 de test d'un réseau de radiocommunication décrit ci-dessus est compris dans la station de base 21 du réseau de radiocommunication, et réutilise une partie des moyens constitutifs de cette dernière.

En effet, si l'on suppose que la station de base est du type mettant en oeuvre un multiplexage spatial (ou "SDMA" pour "Spatial Division Multiple Access" en anglais ou "Accès Multiple à Répartition dans l'Espace" en français), alors elle utilise notamment un faisceau rayonnant radioélectrique de réception directif et orientable à l'aide de moyens électroniques, de façon à "suivre" la station mobile lors de son déplacement au sein de la cellule, pour communiquer avec elle. La station de base comprend donc au moins une première antenne 310a intelligente directive et une chaîne de réception 3 la tels que décrits précédemment, pour communiquer avec la station mobile en cours de communication. Ainsi, il suffit d'ajouter une seconde antenne intelligente directive et une seconde chaîne de réception entière à la station de base, sauf si certains moyens (notamment de décodage et/ou de lecture) de cette seconde chaîne peuvent être partagés avec le dispositif de test d'un réseau de radiocommunication.

Par contre, si l'on suppose que la station de base n'est pas du type mettant en oeuvre un multiplexage spatial, et met en oeuvre par exemple un multiplexage fréquentiel (ou FDMA) ou un multiplexage temporel (ou TDMA) ou encore par code (ou CDMA), alors il est nécessaire pour construire le dispositif de test selon l'invention de prévoir au moins deux antennes intelligentes supplémentaires ainsi qu'au moins une partie des différentes chaînes de réception (notamment des moyens d'affectation des différentes chaînes de réception, des moyens de décodage et des moyens de prise de décision).

## Revendications

1. Procédé de test d'un réseau de radiocommunication consistant à détecter et élucider les interférences entre au moins deux émetteurs, à savoir d'une part une station mobile (24) émettant des signaux utiles en direction d'une station de base (21), et d'autre part au moins un brouilleur (23) émettant des signaux de brouillage également en direction de ladite station de base (21),
comprenant les étapes suivantes :
- on met (11) en oeuvre, en aval d'une première antenne (310a), une première chaîne (3 la) de réception, et en aval d'au moins une seconde antenne (310b), au moins une seconde chaîne (31b) de réception distincte de ladite première chaîne (31a) de réception, chaque antenne (310a, 310b) comprenant un réseau d'éléments rayonnants (32a, 32b) répartis matriciellement sur un support (33a, 33b);
- on affecte (12) ladite première chaîne (3 la) de réception à la réception de premiers signaux, selon une première direction d'arrivée (α₁ ; θ₁) ;
- on affecte (13) ladite au moins une seconde chaîne (31b) de réception à la réception de seconds signaux, selon au moins une seconde direction d'arrivée (α₂ ; θ₂) ;
- chaque chaîne (31a, 31b) de réception tente (14) de décoder les signaux qu'elle reçoit, et si le décodage peut être effectué, lit (15) un identifiant véhiculé par les signaux et propre à l'émetteur qui les a émis, de façon à déterminer (16) d'une part lesquels desdits premiers et seconds signaux sont lesdits signaux de brouillage, et d'autre part au moins une des informations appartenant au groupe comprenant :
* la direction d'arrivée desdits signaux de brouillage ;
* l'identifiant éventuel dudit au moins un brouilleur (23) émettant lesdits signaux de brouillage.

2. Procédé selon la revendication 1, **caractérisé en ce que** ladite direction d'arrivée s'exprime en fonction d'au moins un des angles appartenant au groupe comprenant :
- l'azimut ;
- le site.

3. Procédé selon l'une quelconque des revendications 1 et 2, **caractérisé en ce que** ledit au moins un brouilleur (23) appartient au groupe comprenant :
- les stations mobiles dudit réseau de radiocommunication ;
- les stations de base dudit réseau de radiocommunication ;
- les émetteurs n'appartenant pas audit réseau de radiocommunication.

4. Procédé selon l'une quelconque des revendications 1 à 3, **caractérisé en ce qu'**il comprend, en outre, une étape (17) d'affichage d'au moins une des informations appartenant au groupe comprenant :
- l'identifiant ou l'absence d'identifiant, dudit au moins un brouilleur (23) ;
- la direction d'arrivée des signaux de brouillage.

5. Procédé selon l'une quelconque des revendications 1 à 4, **caractérisé en ce que** ladite station de base et ladite station mobile (24) sont comprises dans un système de radiocommunication cellulaire appartenant au groupe comprenant :
- les systèmes du type UMTS ;
- les systèmes du type GSM 900 ;
- les systèmes du type DCS 1800 ;
- les systèmes du type PCS 1900.

6. Dispositif (22) de test d'un réseau de radiocommunication permettant de détecter et d'élucider les interférences entre au moins deux émetteurs, à savoir d'une part une station mobile (24) émettant des signaux utiles en direction d'une station de base (21), et d'autre part au moins un brouilleur (23) émettant des signaux de brouillage également en direction de ladite station de base (21),
comprenant :
- une première et une seconde antennes (310a, 310b) comprenant chacune un réseau d'éléments rayonnants (32a, 32b) répartis matriciellement sur un support (33a, 33b) ;
- en aval de ladite première antenne (310a), une première chaîne (3 la) de réception comprenant des premiers moyens (312a) de réception, et en aval de ladite au moins une seconde antenne (310b), au moins une seconde chaîne (31b) de réception distincte de ladite première chaîne (3 la) de réception et comprenant des seconds moyens (312b) de réception ;
- des moyens (31 la) d'affectation de ladite première chaîne (3 la) de réception à la réception de premiers signaux, selon une première direction d'arrivée (α₁ ; θ₁) ;
- des moyens (311b) d'affectation de ladite au moins une seconde chaîne (31b) de réception à la réception de seconds signaux, selon au moins une seconde direction d'arrivée (α₂ ; θ₂) ;
- des moyens (313a, 313b) de décodage des signaux reçus par chacune desdites chaînes (31a, 31b) de réception ;
- des moyens (314a, 314b) de lecture, placés en aval desdits moyens (313a, 313b) de décodage, de façon à lire un identifiant véhiculé par les signaux et propre à l'émetteur qui les a émis ;
- des moyens (315a, 315b) de prise de décision, permettant, en fonction de signaux de sortie desdits moyens (313a, 313b) de décodage et (314a, 314b) de lecture, de déterminer d'une part lesquels desdits premiers et seconds signaux sont lesdits signaux de brouillage, et d'autre part au moins une des informations appartenant au groupe comprenant :
* la direction d'arrivée desdits signaux de brouillage ;
* l'identifiant éventuel dudit au moins un brouilleur (23) émettant lesdits signaux de brouillage.

7. Station de base (21) d'un système de radiocommunication permettant de détecter et d'élucider les interférences entre au moins deux émetteurs, à savoir d'une part une station mobile (23) émettant des signaux utiles en direction de ladite station de base (21), et d'autre part au moins un brouilleur (23) émettant des signaux de brouillage également en direction de ladite station de base (21),
comprenant un dispositif (22) de test d'un réseau de radiocommunication selon la revendication 6.

## Claims

1. A method for the testing of a radiocommunications network consisting in detecting and elucidating the nature of the interference between at least two transmitters, namely on the one hand a mobile station (24) sending useful signals towards a base station (21)and, on the other hand, at least one interference unit (23) sending interference signals also towards said base station (21),
comprising the following steps:
- downline from a first antenna (310a), a first reception line (31a) is implemented (11) and, downline from at least one second antenna (310b), at least one second reception line (31b) is implemented, distinct from said first reception line, each antenna (33a, 33b) comprising an array of radiating elements distributed in a matrix arrangement on a support (33a, 33b);
- said first reception line (31a) is assigned (12) to the reception of first signals, in a first incoming direction (α₁; θ₁);
- said at least one second reception line (316) is assigned (13) to the reception of second signals, in at least one second incoming direction (α₂; θ₂);
- each reception line (31a, 31b) tries (14) to decode the signals that it receives and, if the decoding can be done, reads (15) an identifier conveyed by the signals and proper to the transmitter that has sent them, so as to determine (16) firstly which of said first and second signals are said interference signals and, secondly, at least one of the pieces of information belonging to the group comprising:
* the incoming direction of said interference signals
* the identifier, if any, of said at least one interference unit (23) sending said interference signals.

2. A method according to claim 1, wherein said incoming direction is expressed as a function of at least one of the angles belonging to the group comprising:
- the azimuth;
- the elevation angle.

3. A method according to either of the claims 1 and 2, wherein said at least one interference unit (23) belongs to the group comprising:
- the mobile stations of said radiocommunications network
- the base stations of said radiocommunications network
- the transmitters not belonging to said radiocommunications network

4. A method according to any of the claims 1 to 3, furthermore comprising a step (17) for the display of at least one of the pieces of information belonging to the group comprising:
- the identifier or absence of identifier of said at least one interference unit;
- the incoming direction of the interference signals.

5. A method according to any of the claims 1 to 4, wherein said base station and said mobile station are included in a cellular radiocommunications system belonging to the group comprising:
- UMTS type systems
- GSM 900 type systems
- DCS 1800 type systems
- PCS 1900 type systems

6. A device (22) for the testing of a radiocommunications network enabling the detection and elucidation of the nature of the interference between at least two transmitters, namely on the one hand a mobile station (24) sending useful signals towards a base station (21) and, on the other hand, at least one interference unit (23) sending interference signals also towards said base station (21),
said device comprising:
- a first antenna and a second antenna each (310a, 310b) comprising an array of radiating elements (32a, 32b) distributed in a matrix arrangement on a support (33a, 33b);
- downline from said first antenna (310a), a first reception line (31a) comprising first reception means (312a) and, downline from said at least one second antenna (310b), at least one second reception line (31b) distinct from said first reception line and comprising second reception means (312b);
- means (311a) for assigning said first reception line (31a) to the reception of first signals, in a first incoming direction (α₁; θ₁);
- means (311b) for assigning said at least one second reception line (31b) to the reception of second signals, in at least one second incoming direction (α₂; θ₂);
- means (313a, 313b) for decoding the signals received by each of said reception lines;
- reading means (314a, 314b) placed downline from said decoding means (313a, 313b) so as to read an identifier conveyed by the signals and proper to the transmitter that has sent them;
- decision-making means making it (315a, 315b) possible, as a function of output signals from said decoding and reading means, to determine firstly which of said first and second signals are said interference signals and, secondly, at least one of the pieces of information belonging to the group comprising:
* the incoming direction of said interference signals
* the identifier, if any, of said at least one interference unit sending said interference signals.

7. A base station (21) of a radiocommunications system enabling the detection and elucidation of the nature of the interference phenomena between at least two transmitters, namely on the one hand a mobile station (23) sending useful signals towards a base station and, on the other hand, at least one interference unit sending interference signals also towards said base station,
comprising a radiocommunications network testing device (22) according to claim 6.

## Patentansprüche

1. Prüfverfahren eines Funkkommunikationsnetzes, welches darin besteht, die Interferenzen zwischen mindestens zwei Sendern zu erfassen und zu verdeutlichen, nämlich einerseits eine mobile Station (24), die Nutzsignale zu einer Basisstation (21) sendet, und andererseits mindestens einen Störsender (23), der Störsignale ebenfalls zu dieser Basisstation (21) sendet,
wobei das Verfahren die folgenden Schritte umfasst:
- es wird nach einer ersten Antenne (310a) eine erste Empfangskette (31 a) eingesetzt (11) und nach mindestens einer zweiten Antenne (310b) mindestens eine zweite, von der ersten Empfangskette (31a) verschiedene Empfangskette (31 b) eingesetzt, wobei jede Antenne (310a, 310b) ein Netz von abstrahlenden Elementen (32a, 32b) umfasst, die jeweils matrizenartig auf einer Unterlage (33a, 33b) verteilt sind;
- es wird (12) die erste Empfangskette (31a) dem Empfang erster Signale nach einer ersten Einfallsrichtung (α₁, θ₁) zugeordnet;
- es wird (13) die mindestens zweite Empfangskette (31 a) dem Empfang zweiter Signale nach einer mindestens zweiten Einfallsrichtung (α₂, θ₂) zugeordnet;
- jede Empfangskette (31a, 31b) versucht (14) die von ihr empfangenen Signale zu dekodieren und, wenn dies möglich ist, ein von den Signalen befördertes Identifizierungskennzeichen zu lesen (15), das dem abgebenden Sender eigen ist, um einerseits festzustellen (16), welche unter den ersten und zweiten Signalen die erwähnten Störsignale sind, und um andererseits mindestens eine der Informationen aus der folgenden Gruppe zu bestimmen (16):
* die Einfallsrichtung der besagten Störsignale;
* das eventuelle Identifizierungskennzeichen des mindestens einen Störsenders (23), das die besagten Störsignale sendet.

2. Verfahren nach Anspruch 1, **dadurch gekennzeichnet, dass** die erwähnte Einfallsrichtung als Funktion von mindestens einem der Winkel aus der folgenden Gruppe ausgedrückt wird:
- der Azimut;
- der Ort.

3. Verfahren nach einem der Ansprüche 1 oder 2, **dadurch gekennzeichnet, dass** der mindestens eine Störsender (23) der folgendes umfassenden Gruppe gehört:
- die mobilen Stationen des erwähnten Funkkommunikationsnetzes;
- die Basisstationen dieses Funkkommunikationsnetzes;
- die diesem Funkkommunikationsnetz nicht gehörenden Sender.

4. Verfahren nach einem der Ansprüche 1 bis 3, **dadurch gekennzeichnet, dass** es darüber hinaus einen Schritt (17) zur Anzeige von mindestens einer der Informationen aus der folgendes umfassenden Gruppe umfasst:
- das Identifizierungskennzeichen oder das Fehlen eines Identifizierungskennzeichens des mindestens einen Störsenders (23);
- die Einfallsrichtung der Störsignale.

5. Verfahren nach einem der Ansprüche 1 bis 4, **dadurch gekennzeichnet, dass** die Basisstation und die mobile Station (24) in einem Zellen-Funkkommunikationssystem zu der folgendes umfassenden Gruppe gehören:
- die Systeme des Typs UMTS;
- die Systeme des Typs GSM 900;
- die Systeme des Typs DCS 1800;
- die Systeme des Typs PCS 1900.

6. Prüfvorrichtung (22) eines Funkkommunikationsnetzes, die das Erfassen und das Verdeutlichen der Interferenzen zwischen mindestens zwei Sendern, nämlich einerseits eine mobile Station (24), die Nutzsignale zu einer Basisstation (21) sendet, und andererseits mindestens ein Störsender (23), der Störsignale ebenfalls zu dieser Basisstation (21) sendet, ermöglicht,
wobei diese Vorrichtung folgendes aufweist:
- eine erste und eine zweite Antenne (310a, 310b), die jeweils ein Netz von abstrahlenden Elementen (32a, 32b) umfasst, die matrizenartig auf einer Unterlage (33a, 33b) verteilt sind;
- nach der ersten Antenne (310a) eine erste Empfangskette (31 a), die erste Empfangsmittel (312a) aufweist, und nach der mindestens einen zweiten Antenne (310b) mindestens eine zweite, von der ersten Empfangskette (31a) verschiedene Empfangskette (31 b), die zweite Empfangsmittel (312b) aufweist;
- Mittel (311 a), um die erste Empfangskette (31a) dem Empfang erster Signale nach einer ersten Einfallsrichtung (α₁, θ₁) zuzuordnen;
- Mittel (311 b), um die mindestens eine zweite Empfangskette (31 b) dem Empfang zweiter Signale nach mindestens einer zweiten Einfallsrichtung (α₂, θ₂) zuzuordnen;
- Mittel (313a, 313b) zum Dekodieren der von jeder der Empfangsketten (31a, 31b) empfangenen Signale;
- nach den Dekodiermitteln (313a, 313b) angebrachte Lesemittel (314a, 314b) zum Lesen eines von den Signalen beförderten Identifizierungskennzeichens, das dem abgebenden Sender eigen ist;
- Mittel (315a, 315b) zum Treffen von Entscheidungen, die es ermöglichen, als Funktion der Ausgangssignale der Dekodiermittel (313a, 313b) und der Lesemittel (314a, 314b), einerseits zu bestimmen, bei welchen unter den besagten ersten und zweiten Signale es sich um die Störsignale handelt und andererseits mindestens eine der Informationen aus der folgendes umfassenden Gruppe zu bestimmen:
* die Einfallsrichtung der Störsignale;
* das eventuelle Identifizierungskennzeichen des mindestens einen, die Störsignale sendenden Störsenders (23).

7. Basisstation (21) eines Funkkommunikationssystems, die das Erfassen und Erläutern der Interferenzen zwischen mindestens zwei Sendern ermöglicht, nämlich einerseits eine mobile Station (23), welche Nutzsignale zur Basisstation (21) hin sendet und andererseits mindestens ein Störsender (23), der Störsignale ebenfalls zur Basisstation(21) hin sendet,
wobei die Basisstation eine Prüfvorrichtung (22) eines Funkkommunikationssystems nach Anspruch 6 umfasst.
